(19) **Europäisches Patentamt / European Patent Office / Office européen des brevets**

(11) **EP 2 866 507 A1**

(12) **EUROPEAN PATENT APPLICATION**
published in accordance with Art. 153(4) EPC

(43) Date of publication:
**29.04.2015  Bulletin 2015/18**

(21) Application number: **13788596.8**

(22) Date of filing: **18.04.2013**

(51) Int Cl.:
**H04W 72/04** $^{(2009.01)}$    **H04L 1/02** $^{(2006.01)}$

(86) International application number:
**PCT/CN2013/074382**

(87) International publication number:
**WO 2013/166904 (14.11.2013 Gazette 2013/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.07.2012  CN 201210268537**

(71) Applicant: **ZTE Corporation
Shenzhen, Guangdong 518057 (CN)**

(72) Inventors:
• **GUO, Senbao
  Shenzhen
  Guangdong 518057 (CN)**

• **SUN, Yunfeng
  Shenzhen
  Guangdong 518057 (CN)**
• **ZHANG, Wenfeng
  Shenzhen
  Guangdong 518057 (CN)**

(74) Representative: **Vossius & Partner
Patentanwälte Rechtsanwälte mbB
Siebertstrasse 3
81675 München (DE)**

(54) **DMRS PROCESSING METHOD AND DEVICE**

(57)  A Demodulation Reference Signal (DMRS) processing method and apparatus are provided, in which a base station side configures beforehand for a terminal side one or more sequence identifiers and/or bandwidth information needed to generate a DMRS sequence, through User Equipment (UE)-specific higher-layer signaling, and then the base station side indicates to the terminal side specific sequence identifier and/or bandwidth information employed to send the DMRS sequence by utilizing at least one of the following indication methods: 1. using a bit in downlink control indication signaling for indication; 2. using a scheduled time domain and/or frequency domain resource location for indication.

Fig. 1

110
A base station side configures beforehand for a terminal side one or more sequence identifiers and/or bandwidth information needed to generate a DMRS sequence, through UE-specific higher-layer signaling

120
The base station side indicates to the terminal side the specific sequence identifier and/or bandwidth information employed to send the DMRS sequence by utilizing at least one of the following indication methods:
1. using a bit in downlink control indication signaling for indication;  and
2. using a scheduled time domain and/or frequency domain resource location for indication

## Description

## TECHNICAL FIELD

The disclosure relates to the field of telecommunications, and particularly relates to a Demodulation Reference Signal (DMRS) processing method and apparatus.

## BACKGROUND

After several releases such as R8/9/10 have been provided for a Long Term Evolution (LTE) system, researches on R11 technique have also been carried out successively. Currently, a part of R8 products begin to be used in business gradually, R9 and R10 remain to be further proceeded with product planning.

After experiencing an R8 phase and an R9 phase, a lot of new characters are added to the R10 based on the above two, for example, pilot characters such as DMRS, Channel State Information Reference Signal (CSI-RS) and the like, and transmission and feedback characters such as 8-antenna support and the like, and etc. Specifically, an enhanced Inter-Cell Interference Cancellin (eICIC) technique further considers a technique for avoiding inter-cell interference based on considering R8/9 Inter Cell Interference Coordination (ICIC). With regard to the technique for solving an inter-cell interference problem, avoiding inter-cell interference under a homogeneous network is mainly considered at the beginning of an R10 phase, in which the eICIC technique and a Coordinated Multi-point (CoMP) technique are mainly considered.

A CoMP transmission way mainly includes Joint Transmission (JT), and Coordinated Scheduling (CS)/Coordinated Beamforming (CB). With regard to the JT, different Transmission Points (TPs) transmit data for same one piece of User Equipment (UE), therefore it is necessary to do further research to find a cell ID where TP is relied on by the UE to generate a DMRS sequence. It can be seen that supporting dynamic DMRS sequence alternation is beneficial for dynamic space resource multiplexing and interference randomization, and good for further improvement of a system capacity, which however is lack of specific technical support currently.

## SUMMARY

In view of this, the disclosure is to provide a DMRS processing method and apparatus, ensuring dynamic space resource multiplexing and interference randomization, further supporting improvement of the system capacity.

In order to achieve the above purpose, a technical scheme of the disclosure is implemented like this:

A Demodulation Reference Signal (DMRS) processing method is provided, including:

configuring beforehand for a terminal side, by a base station side, one or more sequence identifiers and/or bandwidth information needed to generate a DMRS sequence, through User Equipment (UE)-specific higher-layer signaling, and then indicating to the terminal side, by the base station side, specific sequence identifier and/or specific bandwidth information employed to send the DMRS sequence by utilizing at least one of following indication methods:

using a bit in downlink control indication signaling for indication; and

using a scheduled time domain and/or frequency domain resource location for indication.

In an embodiment, the sequence identifier is for generating an initial value of the DMRS sequence, and the sequence identifier is used in the same way as a cell ID in a DMRS sequence generating formula in R10, namely the sequence identifier is utilized to substitute the cell ID.

In an embodiment, the base station side sends data utilizing a DMRS-related transmission mode to the terminal side within a sub-frame where a Cell Specific Reference Signal (CRS) does not exist in a Physical Downlink Shared Channel (PDSCH) area, and performs a Downlink Control Information (DCI) configuration using format 1A, a centralized/distributed Virtual Resource Block (VRB) maps and allocates a 1-bit identifier to indicate which sequence identifier and/or which piece of bandwidth information in two sequence identifiers and/or two pieces of bandwidth information configured beforehand by a higher-layer is employed by the base station side to send the DMRS sequence.

In an embodiment, the DMRS-related transmission mode includes transmission mode 9 and/or transmission mode 10 and/or a transmission mode which utilizes a DMRS as a base demodulation reference signal and is in a more advanced release; the sub-frame where a CRS does not exist in a PDSCH region includes a Multicast Broadcast Single Frequency Network (MBSFN) sub-frame and/or an extended carrier type sub-frame and a sub-frame which does not have CRS transmission later.

In an embodiment, when the base station side sends data by utilizing a DMRS-related transmission mode to the terminal side within a sub-frame where a CRS does not exist in a PDSCH region, and performs DCI configuration using format x, the base station side utilizes a time domain and/or frequency domain resource location of the DCI Format x to indicate which sequence identifier and/or which piece of bandwidth information in N (N>1) sequence identifiers and/or S (S>1) pieces of bandwidth information configured by a higher-layer is employed by the base station side to send the DMRS sequence;

wherein the DCI format x at least includes one of the following DCI formats: DCI Format 1A, DCI Format 2B, DCI Format 2C, DCI Format 2D, and a DCI Format newly-added in a later release.

In an embodiment, when the base station side sends data to the terminal side within a sub-frame where a CRS does not exist in a PDSCH region by utilizing a DMRS-related transmission mode, and performs DCI configuration using format x, the base station side utilizes a newly-added 1 or 2 bits and/or a Quasi-Co-Location Indicator (PQI) indication bit and/or an Nscid bit and/or an aggregate level and/or a Control Channel Element (CCE) location where DCI of DCI Format X is located and/or a scheduling sub-frame of the DCI Format X to indicate which sequence identifier and/or which piece of bandwidth information in N (N>1) sequence identifiers and/or S (S>1) pieces of bandwidth information configured beforehand by a higher-layer is employed by the base station side to send the DMRS sequence;

wherein the DCI Format x at least includes one of the following DCI Formats: DCI Format 1A, DCI Format 2B, DCI Format 2C, DCI Format 2D, and a DCI Format newly-added in a later release.

In an embodiment, when the base station side sends data to the terminal side in a PDSCH region by utilizing a DMRS-related transmission mode, the base station side utilizes a newly-added 1 or 2 bits and/or a PQI indication bit and/or an Nscid bit and/or a New Data Indicator (NDI) bit in a Disable Transmitting Block (Disable TB) in DCI bits and/or an aggregate level and/or a Control Channel Element (CCE) location where DCI is located and/or a scheduling sub-frame of the DCI to indicate which piece of bandwidth information in S(S>1) pieces of bandwidth information configured by a higher-layer is employed by the base station side to send the DMRS sequence.

In an embodiment, when the base station side sends data utilizing a DMRS-related transmission mode to the terminal side in a PDSCH region, and sends DCI 1C or DCI format 1 a in a common search space or sends a DCI Format corresponding to enhanced common control information in the common search space, the base station side employs a system cell ID and/or bandwidth information to generate and send the DMRS sequence.

In an embodiment, when the base station side sends data utilizing a DMRS-related transmission mode to the terminal side in a PDSCH region, and sends DCI 1C or DCI format 1 a in a UE-specific search space or sends a DCI Format corresponding to enhanced common control information in a common search space, the base station side employs first one of N (N>1) sequence identifiers and/or S(S>1) pieces of bandwidth information configured beforehand by a higher-layer to generate and send the DMRS sequence.

In an embodiment, when the base station side sends data utilizing a DMRS-related transmission mode to the terminal side in a PDSCH region, and a corresponding DCI is DCI format 1a, the base station side employs a system cell ID and/or bandwidth information to generate and send the DMRS sequence.

In an embodiment, if a higher-layer does not configure N (N>1) sequence identifiers and/or S(S>1) pieces of bandwidth information, then the base station side employs a system cell ID and/or bandwidth information to generate and send the DMRS sequence.

In an embodiment, the method further includes:

receiving beforehand, by the terminal side, the UE-specific higher-layer signaling, to obtain the one or more sequence identifiers and/or bandwidth information needed to generate the DMRS sequence, and then obtaining, by the terminal side, which sequence identifier and/or which piece of bandwidth information in the one or more sequence identifiers and/or bandwidth information is employed by the base station side to send the DMRS sequence by utilizing at least one of following indication methods:

using a bit in downlink control indication signaling for indication; and

using a scheduled time domain and/or frequency domain resource location for indication.

A Demodulation Reference Signal (DMRS) processing method includes:

receiving beforehand, by a terminal side, User Equipment (UE)-specific higher-layer signaling, to obtain one or more sequence identifiers and/or bandwidth information needed to generate a DMRS sequence, and then obtaining, by the terminal side, which sequence identifier and/or which piece of bandwidth information in the one or more sequence identifiers and/or bandwidth information is employed by a base station side to send the DMRS sequence by utilizing at least one of following indication methods:

using a bit in downlink control indication signaling for indication; and

using a scheduled time domain and/or frequency domain resource location for indication.

In an embodiment, the sequence identifier is for generating an initial value of the DMRS sequence, and the sequence identifier is used in the same way as a cell ID in a DMRS sequence generating formula in R10, namely the sequence identifier is utilized to substitute the cell ID.

In an embodiment, when the terminal side receives data in a sub-frame where a Cell Dedicated Reference Signal (CRS) does not exist in a Physical Downlink Shared Channel (PDSCH) area by utilizing a DMRS-related transmission mode and receives a Downlink Control Information (DCI) using format 1A, the terminal side obtains, by utilizing a 1-bit identifier of a centralized/distributed Virtual Resource Block (VRB) in the DCI Format 1A, which sequence identifier and/or which piece of bandwidth information in two sequence identifiers and/or two pieces of bandwidth information configured by a higher-layer is employed by the base station side to send the DMRS sequence.

In an embodiment, the DMRS-related transmission mode includes transmission mode 9 and/or transmission mode 10 and/or a transmission mode which utilizes the DMRS as a base demodulation reference signal and is in a more advanced release; the sub-frame where a CRS does not exist in a PDSCH region includes a Multicast Broadcast Single Frequency Network (MBSFN) sub-frame and/or an extended carrier type sub-frame and a sub-frame which does not include a CRS later.

In an embodiment, when the terminal side receives data within a sub-frame where a CRS does not exist in a PDSCH region by utilizing a DMRS-related transmission mode and receives DCI using format x, the terminal side utilizes a time domain and/or frequency domain resource location of the DCI Format x to obtain which sequence identifier and/or which piece of bandwidth information in N (N>1) sequence identifiers and/or S (S>1) bandwidth information configured by a higher-layer is employed by the base station side to send the DMRS sequence;

wherein the DCI format x at least includes one of following DCI formats: DCI Format 1A, DCI Format 2B, DCI Format 2C, DCI Format 2D, and a DCI Format newly-added in a later release.

In an embodiment, when the terminal side receives data within a sub-frame where a CRS does not exist in a PDSCH region by utilizing a DMRS-related transmission mode and receives DCI using format x, the terminal side utilizes a newly-added 1 or 2 bits and/or a Quasi-Co-Location Indicator (PQI) indication bit and/or an Nscid bit and/or an aggregate level and/or a Control Channel Element (CCE) location where DCI of DCI Format X is located and/or a scheduling sub-frame of the DCI Format X to obtain which sequence identifier and/or which piece of bandwidth information in N (N>1) sequence identifiers and/or S (S>1) pieces of bandwidth information configured by a higher-layer is employed by the base station side to send the DMRS sequence;

wherein the DCI Format x at least includes one of following DCI Formats: DCI Format 1A, DCI Format 2B, DCI Format 2C, DCI Format 2D, and a DCI Format newly-added in a later release.

In an embodiment, when the terminal side receives data in a PDSCH region by utilizing a newly-added 1 or 2 bits and/or a PQI indication bit and/or an Nscid bit and/or an aggregate level and/or a Control Channel Element (CCE) location where DCI is located and/or a scheduling sub-frame of the DCI to obtain which piece of bandwidth information in S(S>1) pieces of bandwidth information configured by a higher-layer is employed by the base station side to send the DMRS sequence.

In an embodiment, when the terminal side receives data in a PDSCH region by utilizing a DMRS-related transmission mode, and receives DCI 1C or DCI format 1 a in a common search space or sends a DCI Format corresponding to enhanced common control information in the common search space, the terminal side employs a system cell ID and/or bandwidth information to generate the DMRS sequence to demodulate a DMRS.

In an embodiment, when the terminal side receives data in a PDSCH region by utilizing a DMRS-related transmission mode, and a DCI format is DCI format 1 a, the terminal side employs a system cell ID and/or bandwidth information to generate the DMRS sequence to demodulate a DMRS.

In an embodiment, when the terminal side receives data in a PDSCH region by utilizing a DMRS-related transmission mode, and receives DCI 1C or DCI format 1 a in a UE-specific search space or sends a DCI Format corresponding to enhanced common control information in a common search space, the terminal side employs first one of N(N>1)sequence identifiers and/or S(S>1) pieces of bandwidth information configured beforehand by a higher-layer to generate the DMRS sequence to demodulate a DMRS.

In an embodiment, when the terminal side does not receive N(N>1)sequence identifiers and/or S(S>1) pieces of bandwidth information configured by a higher-layer, the terminal side employs a system cell ID and/or bandwidth information to generate the DMRS sequence to demodulate a DMRS.

In an embodiment, before the terminal side receives the one or more sequence identifiers and/or the bandwidth information, the method further includes:

configuring, by the base station side, the one or more sequence identifiers and/or bandwidth information needed to generate the DMRS sequence, for the terminal side beforehand through the UE specific higher-layer signaling, and then indicating to the terminal side, by the base station side, specific sequence identifier and/or specific bandwidth information employed to send the DMRS sequence by utilizing at least one of following indication methods:

using a bit in downlink control indication signaling for indication; and

using a scheduled time domain and/or frequency domain resource location for indication.

A Demodulation Reference Signal (DMRS) processing method includes:

notifying, by a base station side, a terminal side of whether a Cell Specific Reference Signal (CRS) is employed for demodulation or a DMRS is employed for demodulation at a Physical Downlink Shared Channel (PDSCH) scheduled by Downlink Control Information (DCI) Format 1a, through at least one of following methods:

notifying through a bit in downlink control indication signaling; and

notifying through a scheduled time domain and/or frequency domain resource location.

In an embodiment, when the base station side sends data to the terminal side in a PDSCH region by utilizing a DMRS-related transmission mode and employs format 1A to perform DCI configuration, a centralized/distributed Virtual Resource Block (VRB) in the DCI Format 1A maps and allocates a 1-bit identifier to indicate whether the terminal side employs the CRS to demodulate the data or employs the DMRS to demodulate the data.

In an embodiment, when the base station side sends data to the terminal side in a PDSCH region by utilizing a DMRS-related transmission mode and employs format 1 A to perform DCI configuration, the base station side utilizes a DCI Format 1A scheduling subframe and/or a Control Channel Element (CCE) location in which DCI is located and/or an aggregate level to indicate whether the terminal side employs the CRS to demodulate the data or employs the DMRS to demodulate the data.

In an embodiment, when the base station side sends data to the terminal side in a PDSCH region in which the CRS exists by utilizing a DMRS-related transmission mode and employs format 1A to perform DCI configuration, a centralized/distributed VRB in the DCI Format 1 A maps and allocates a 1-bit identifier to indicate whether the terminal side employs the CRS to demodulate the data or employs the DMRS to demodulate the data.

In an embodiment, when the base station side sends data to the terminal side in a PDSCH region in which the CRS exists by utilizing a DMRS-related transmission mode and employs format 1A to perform DCI configuration, the base station side utilizes a DCI Format 1A scheduling sub-frame and/or a CCE location in which DCI is located and/or an aggregate level to indicate whether the terminal side employs the CRS to demodulate the data or employs the DMRS to demodulate the data.

In an embodiment, when the base station side sends data to the terminal side in a PDSCH region by utilizing a DMRS-related transmission mode, if the base station side does not beforehand notify the terminal side of multiple sequence identifiers and/or bandwidth information configured by User Equipment (UE)-specific higher-layer signaling, then the base station side generates a DMRS sequence in accordance with a system cell ID and/or bandwidth information.

In an embodiment, when the base station side sends data to the terminal side in a PDSCH region by utilizing a DMRS-related transmission mode and employs format 1A to perform DCI configuration, if the base station side does not notify beforehand the terminal side of the multiple sequence identifiers and/or bandwidth information configured by UE-specific higher-layer signaling, then the base station side generate a DMRS sequence in accordance with a system cell ID and/or bandwidth information.

In an embodiment, when the base station side sends data by utilizing a DMRS-related transmission mode to the terminal side in a PDSCH region in which the CRS exists, and employs format 1A to perform DCI configuration, if the base station side does not maps and allocates a 1-bit identifier through a centralized/distributed VRB in the DCI Format 1 A to indicate whether the terminal side employs the CRS to demodulate the data or employs the DMRS to demodulate the data, then the base station side employs the CRS as a demodulation reference signal to send the data in a sub-frame where the CRS exists in the PDSCH region, and employs the DMRS as a demodulation reference signal to send the data in a sub-frame where no CRS exists in the PDSCH region.

In an embodiment, the system cell ID is a cell ID notified during synchronization or an initial cell ID notified when accessing a carrier, the bandwidth information is a system bandwidth obtained when detecting a Physical Broadcast Channel (PBCH) or an initial bandwidth notified when accessing a carrier.

In an embodiment, the method further includes:

learning, by the terminal side, whether the Cell Specific Reference Signal (CRS) is employed for demodulation or the DMRS is employed for demodulation at the PDSCH scheduled by the DCI Format 1 a through at least one of following indication methods:

learning through a bit in downlink control indication signaling; and

learning through a scheduled time domain and/or frequency domain resource location.

A Demodulation Reference Signal (DMRS) processing method includes:

learning, by a terminal side, whether a Cell Specific Reference Signal (CRS) is employed for demodulation or a DMRS is employed for demodulation at a Physical Downlink Shared Channel (PDSCH) scheduled by a Downlink Control Information(DCI) Format 1 a through at least one of following indication methods:

learning g through a bit in downlink control indication signaling; and

learning through a scheduled time domain and/or frequency domain resource location.

In an embodiment, when the terminal side receives data in a PDSCH region by utilizing a DMRS-related transmission mode and employs format 1A to perform DCI configuration, the terminal side learns, through a 1-bit identifier mapped and allocated by a centralized/distributed Virtual Resource Block (VRB), whether to employ the CRS to demodulate the data or to employ the DMRS to demodulate the data.

In an embodiment, when the terminal side receives data in a PDSCH region by utilizing a DMRS-related transmission mode and employs format 1A to perform DCI configuration, the terminal side utilizes a DCI Format 1A scheduling sub-frame and/or a Control Channel Element (CCE) location in which DCI is allocated and/or an aggregate level to learn whether to employ the CRS to demodulate the data or to employ the DMRS to demodulate the data.

In an embodiment, when the terminal side receives data in a PDSCH region in which the CRS exists by utilizing a DMRS-related transmission mode and employs format 1A to perform DCI configuration, the terminal side utilizes a 1-bit identifier mapped and allocated by a centralized/distributed VRB in the DCI Format 1A to learn whether to employ the CRS to demodulate the data or to employ the DMRS to demodulate the data.

In an embodiment, when the terminal side receives data in a PDSCH region in which the CRS exists by utilizing a DMRS-related transmission mode and employs format 1A to perform DCI configuration, the terminal side utilizes a DCI Format 1A scheduling sub-frame and/or a CCE location in which DCI is allocated and/or an aggregate level to learn whether to employ CRS to demodulate the data or to employ the DMRS to demodulate the data.

In an embodiment, when the terminal side receives data in the PDSCH region by utilizing a DMRS-related transmission mode, if the terminal side does not obtain beforehand multiple sequence identifiers and/or bandwidth information configured by specific higher-layer signaling, then the terminal side generates a DMRS sequence in accordance with a system cell ID and/or bandwidth information.

In an embodiment, when the terminal side receives data in a PDSCH region by utilizing a DMRS-related transmission mode and employs format 1A to perform DCI configuration, if the terminal side does not obtain beforehand multiple sequence identifiers and/or bandwidth information configured by specific higher-layer signaling, then the terminal side generates a DMRS sequence in accordance with a system cell ID and/or bandwidth information.

In an embodiment, the system cell ID is a cell ID notified during synchronization or an initial cell ID notified when accessing a carrier, the bandwidth information is a system bandwidth obtained when detecting a Physical Broadcast Channel (PBCH) or an initial bandwidth notified when accessing a carrier.

In an embodiment, when the terminal side receives data in a PDSCH region in which the CRS exists by utilizing a DMRS-related transmission mode and employs format 1A to perform DCI configuration, if the terminal side does not learn whether to employ the CRS for demodulation or to employ the DMRS for demodulation through a 1-bit identifier allocated by a centralized/distributed VBR in the DCI Format 1A, then the terminal side employs the CRS as a demodulation reference signal to receive the data in a sub-frame where the CRS exists in the PDSCH region, and employs the DMRS as a demodulation reference signal to receive the data in a sub-frame where no CRS exists in the PDSCH region.

In an embodiment, before the terminal side learns whether to employ the CRS for demodulation or to employ the DMRS for demodulation, the method further includes:

notifying, by the base station side, the terminal side of whether the CRS is employed for demodulation or the DMRS is employed for demodulation at the PDSCH scheduled by the DCI Format 1 a through at least one of following methods:

notifying through a bit in downlink control indication signaling; and

notifying through a scheduled time domain and/or frequency domain resource location.

A Demodulation Reference Signal (DMRS) processing apparatus, located at a base station side, is configured to configure beforehand through User Equipment (UE)-specific higher-layer signalling, for a terminal side, one or more sequence identifiers and/or bandwidth information needed to generate a DMRS sequence, and then indicate to the terminal side specific sequence identifier and/or specific bandwidth information employed to send the DMRS sequence by utilizing at least one of following indication methods:

using a bit in downlink control indication signaling for indication; and

using a scheduled time domain and/or frequency domain resource location for indication.

In an embodiment, the terminal side is configured to receive beforehand the UE-specific higher-layer signaling to obtain the one or more sequence identifiers and/or bandwidth information needed to generate the DMRS sequence, and then obtain the specific sequence identifier and/or specific bandwidth information employed by the base station side to send the DMRS sequence in the one or more sequences and/or bandwidth information by utilizing at least one of following indication methods:

using a bit in downlink control indication signaling for indication; and

using a scheduled time domain and/or frequency domain resource location for indication.

In an embodiment, the apparatus is a base station or is provided in a base station.

A Demodulation Reference Signal (DMRS) processing apparatus, located at a terminal side, is configured to receive beforehand User Equipment (UE)-specific higher-layer signaling to obtain one or more sequence identifiers and/or bandwidth information needed to generate a DMRS sequence, and then obtain specific sequence identifier and/or specific bandwidth information employed by a base station side to send the DMRS sequence in the one or more sequences identifier and/or bandwidth information by utilizing at least one of following indication methods:

using a bit in downlink control indication signaling for indication; and

using a scheduled time domain and/or frequency domain resource location for indication.

In an embodiment, the apparatus communicates with the base station side, and the base station side is configured to configure beforehand for the terminal side, the one or more sequence identifiers and/or bandwidth information needed to generate the DMRS sequence, through the UE-specific higher-layer signaling, and then indicate to the terminal side the specific sequence identifier and/or specific bandwidth information employed to send the DMRS sequence, by utilizing at least one of following indication methods:

using a bit in downlink control indication signaling for indication; and

using a scheduled time domain and/or frequency domain resource location for indication.

A Demodulation Reference Signal (DMRS) processing apparatus, located at a base station side, is configured to notify a terminal side of whether a Cell Specific Reference Signal (CRS) is employed for demodulation or a DMRS is employed for demodulation at a Physical Downlink Shared Channel (PDSCH) scheduled by a Downlink Control Information(DCI) Format 1a, through at least one of following methods:

notifying through a bit in downlink control indication signaling; and
notifying through a scheduled time domain and/or frequency domain resource location.

In an embodiment, the terminal side is configured to learn whether the CRS is employed for demodulation or the DMRS is employed for demodulation at the PDSCH scheduled by the DCI Format 1 a, through at least one of following indication methods:

learning through a bit in downlink control indication signaling; and

learning through a scheduled time domain and/or frequency domain resource location.

In an embodiment, the apparatus is a base station or provided in a base station.
A Demodulation Reference Signal (DMRS) processing apparatus, located at a terminal side, is configured to learn whether a Cell Specific Reference Signal (CRS) is employed for demodulation or a DMRS is employed for demodulation at a Physical Downlink Shared Channel (PDSCH) scheduled by a Downlink Control Information (DCI) Format 1 a by at least one of following indication methods:

learning through a bit in downlink control indication signaling; and

learning through a scheduled time domain and/or a frequency domain resource location.

In an embodiment, the apparatus communicates with a base station side, and the base station side is configured to notify the terminal side of whether the PDSCH scheduled by the DCI Format 1 a employs the CRS for demodulation or employs the DMRS for demodulation by at least one of the following methods:

notifying through a bit in downlink control indication signaling; and

notifying through a scheduled time domain and/or the frequency domain resource location.

In an embodiment, the apparatus is a terminal or provided in a terminal.
The method and apparatus of the disclosure ensure dynamic space resource multiplex and interference randomization, and support further improvement of the system capacity. The PQI in the DCI Format 2D is for dynamically indicating PDSCH RE Mapping information and Quasi-Co-Location information. The Nscid is for indicating DMRS sequence scramble generating information. Contents in Chapter 6.10.3 of Standard 36.211 may be referenced, for example, $n_{\text{SCID}}$ in $c_{\text{init}} = \left( \lfloor n_{\text{s}} / 2 \rfloor + 1 \right) \cdot \left( 2n_{\text{ID}}^{(n_{\text{SCID}})} + 1 \right) \cdot 2^{16} + n_{\text{SCID}}$ is the Nscid described in the disclosure. If a similar PQI and Nscid domain exists in a new transmission mode and a new DCI Format introduced in the future, the contents in this disclosure is still suitable.

## BRIEF DESCRIPTION OF THE DRAWINGS

Fig. 1 is a schematic diagram showing a DMRS processing procedure according to an embodiment of the disclosure; and

Fig. 2 is a schematic diagram showing a DMRS processing procedure according to another embodiment of the disclosure.

## DETAILED DESCRIPTION

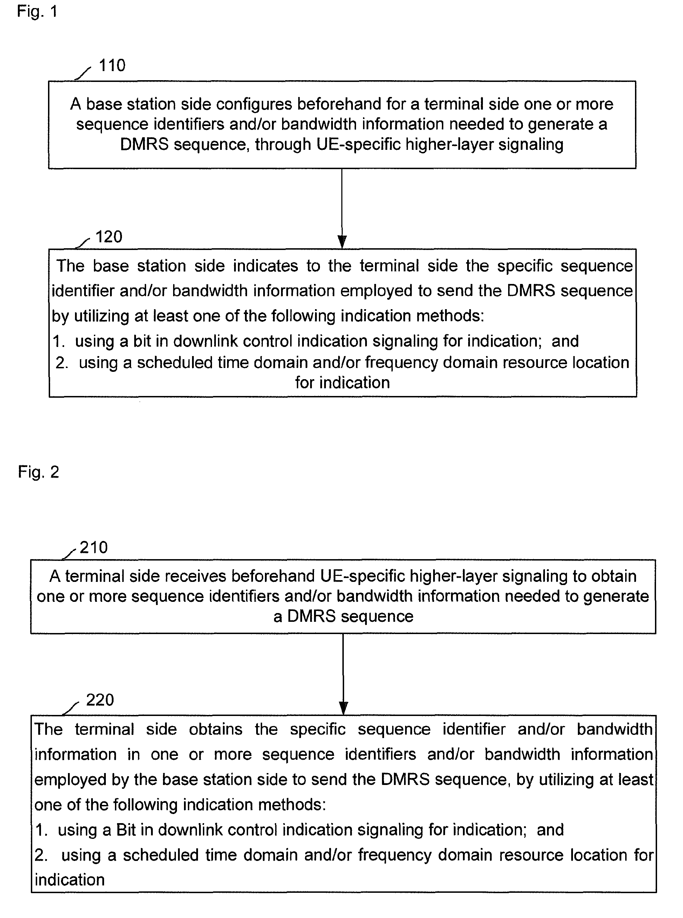

In an actual application, as shown in Fig. 1, a base station side configures beforehand for a terminal side one or more sequence identifiers and/or bandwidth information needed to generate a DMRS sequence, through a UE-specific higher-layer signaling, and then the base station side indicates, to the terminal side, specific sequence identifier and/or bandwidth information employed to send the DMRS sequence by utilizing at least one of the following indications methods:

1. using a bit in downlink control indication signaling for indication; and

2. using a scheduled time domain and/or frequency domain resource location for indication.

The sequence identifier is for generating an initial value of the DMRS sequence, wherein the sequence identifier is used in the same way as a cell ID, namely the sequence identifier is utilized to substitute the cell ID.
When the base station side sends data to the terminal side within a sub-frame where a Cell Specific Reference Signal (CRS) does not exist in a PDSCH region by utilizing a DMRS-related transmission mode and employs a format 1 A to perform DCI configuration, a centralized/distributed Virtual Resource Block (VRB) in the DCI Format 1A allocates a 1-bit identifier to indicate the specific sequence identifier and/or bandwidth information selected from higher-layer configured two sequence identifiers and/or two pieces of bandwidth information and employed by the base station side to send the DMRS sequence.
The DMRS-related transmission mode includes transmission mode 9 and/or transmission mode 10 and/or a transmission mode which utilizes the DMRS as a base demodulation reference signal and is in a more advanced release. The sub-frame where no CRS exists in the PDSCH region includes a Multicast Broadcast Single Frequency Network (MBSFN) sub-frame and/or an extended carrier type sub-frame and a sub-frame which does not include a CRS in a later release.

When the base station side sends data by utilizing the DMRS-related transmission mode to the terminal side within a sub-frame where no CRS exists in the PDSCH region and employs the format 1A to perform the DCI configuration, the base station side utilizes a time domain and/or frequency domain resource location to indicate specific sequence identifier and/or specific bandwidth information selected from higher-layer configured N (N>1) sequence identifiers and/or S (S>1) pieces of bandwidth information and employed by the base station side to send the DMRS sequence;
When the base station side sends data to the terminal side within a sub-frame where no CRS exists in the PDSCH region by utilizing the DMRS-related transmission mode and employs format x to perform the DCI configuration, the base station side utilizes a newly-added 1 or 2 bits and/or a PQI indication bit and/or an Nscid bit and/or a New Data Indicator (NDI) bit in Disable Transmitting Block (Disable TB) in DCI bits and/or an aggregate level and/or a Control Channel Element (CCE) location where the DCI of the DCI Format x is located and/or a scheduling sub-frame of the DCI format x to indicate specific sequence identifier and/or specific bandwidth information selected from higher-layer configured N (N>1) sequence identifiers and/or S (S>1) pieces of bandwidth information and employed by the base station side to send the DMRS sequence; wherein the DCI format x at least includes one of the following DCI Formats: DCI Format 1A, DCI Format 2B, DCI Format 2C, DCI Format 2D, and a DCI Format probably to be newly added in a later release.
When the base station side sends data to the terminal side in the PDSCH region by utilizing the DMRS-related transmission mode, the base station side utilizes a newly-added 1 or 2 bits and/or a PQI indication bit and/or an Nscid bit and/or an NDI bit in Disable TB in DCI bits and/or an aggregate level and/or a Control Channel Element (CCE) location where the DCI is located and/or a scheduling sub-frame of the DCI to indicate specific bandwidth information selected from higher-layer configured in S (S>1) pieces of bandwidth information and employed by the base station side to send the DMRS sequence;
When the base station side sends data to the terminal side in the PDSCH region by utilizing the DMRS-related transmission mode, and sends the DCI or the DCI format 1 a in a common search space or sends a DCI Format corresponding to enhanced common control information in the common search space, the base station side employs a system cell ID and/or bandwidth information to generate and send the DMRS sequence.
Relative to the above base station side, as shown in Fig. 2, a terminal side may receive beforehand the UE-specific higher-layer signaling to obtain one or more sequence identifiers and/or bandwidth information needed to generate the DMRS sequence, and then, by utilizing at least one of the following indication methods, the terminal side obtains specific sequence identifier and/or bandwidth information selected from one or more sequences and/or bandwidth information and employed by the base station side to send the DMRS sequence:

1. using a bit in downlink control indication signaling for indication; and

2. using a scheduled time domain and/or frequency domain resource location for indication.

The sequence identifier is for generating the initial value of the DMRS sequence, wherein the sequence identifier is used in the same way as the cell ID, namely the sequence identifier is utilized to substitute the cell ID.

When the terminal side receives data within a sub-frame where no CRS exists in a PDSCH region by utilizing a DMRS-related transmission mode and employs the format 1A to receive the DCI, the terminal side utilizes a 1-bit identifier of a centralized/distributed VRB in the DCI format 1A to obtain specific sequence identifier and/or specific bandwidth information selected from higher-layer configured two sequence identifiers and/or two pieces of bandwidth information and employed by the base station side to send the DMRS sequence.

The DMRS-related transmission mode includes transmission mode 9 and/or transmission mode 10 and/or a transmission mode which utilizes the DMRS as a base demodulation reference signal and is in a more advanced release. The sub-frame where no CRS exists in the PDSCH region includes an MBSFN sub-frame and/or an extended carrier type sub-frame and a sub-frame which does not include a CRS later.

When the terminal side receives data within the sub-frame where no CRS exists in the PDSCH region by utilizing the DMRS-related transmission mode and employs the format 1 A to receive the DCI, the terminal side utilizes the time domain and/or frequency domain resource location of the DCI Format 1A to obtain specific sequence identifier and/or specific bandwidth information selected from higher-layer configured N (N>1) sequence identifiers and/or S (S>1) pieces of bandwidth information and employed by the base station side to send the DMRS sequence.

When the terminal side receives data within a sub-frame where no CRS exists in the PDSCH region by utilizing the DMRS-related transmission mode and employs the format x to receive the DCI, the terminal side utilizes a newly-added 1 or 2 bits and/or a PQI indication bit and/or an Nscid bit and/or a New Data Indicator (NDI) bit in Disable Transmitting Block (Disable TB) in DCI bits and/or an aggregate level and/or a Control Channel Element (CCE) location where the DCI of the DCI Format x is located and/or a scheduling sub-frame of the DCI format x to obtain specific sequence identifier and/or specific bandwidth information selected from higher-layer configured N (N>1) sequence identifiers and/or S (S>1) pieces of bandwidth information and employed by the base station side to send the DMRS sequence; wherein the DCI Format x at least includes one of the following DCI Formats: the DCI Format 1A, the DCI Format 2B, the DCI Format 2C, the DCI Format 2D, and the DCI Format probably to be newly added in a later release.

When the terminal side receives data in the PDSCH region by utilizing the DMRS-related transmission mode, the terminal side utilizes a newly-added 1 or 2 bits and/or a PQI indication bit and/or an Nscid bit and/or an NDI bit in Disable TB in DCI bits and/or an aggregate level and/or a Control Channel Element (CCE) location where the DCI is located and/or a scheduling sub-frame of the DCI to obtain specific bandwidth information selected from higher-layer configured S (S>1) pieces of bandwidth information and employed by the base station side to send the DMRS sequence.

When the terminal side receives data in the PDSCH region by utilizing the DMRS-related transmission mode, and receives the DCI or the DCI format 1 a in the common search space or sends a DCI Format corresponding to the enhanced common control information in the common search space, the terminal side employs a system cell ID and/or bandwidth information to generate a DMRS sequence to demodulate the DMRS.

Additionally, the base station side may notify the terminal side to employ a CRS or a DMRS for demodulation at a PDSCH scheduled by the DCI Format 1 a through at least one of the following methods:

1. notifying through a bit in downlink control indication signaling; and

2. notifying through a scheduled time domain and/or frequency domain resource location

When the base station side sends data to the terminal side in the PDSCH region by utilizing the DMRS-related transmission mode and employs the format 1 A to perform the DCI configuration, a centralized/distributed VRB in the DCI Format 1A maps and allocates a 1-bit identifier to indicate whether the terminal side employs the CRS to demodulate data or employs the DMRS to demodulate data.

When the base station side sends data to the terminal side in the PDSCH region by utilizing the DMRS-related transmission mode and employs the format 1A to perform the DCI configuration, the base station side utilizes the DCI Format 1 A scheduling sub-frame and/or the CCE location in which the DCI is located and/or the aggregate level to indicate whether the terminal side employs the CRS to demodulate data or employs the DMRS to demodulate data.

When the base station side sends data to the terminal side in the PDSCH region, in which the CRS exists, by utilizing the DMRS-related transmission mode and employs the format 1A to perform the DCI configuration, the centralized/distributed VRB in the DCI Format 1A maps and allocates a 1-bit identifier to indicate whether the terminal side employs the CRS to demodulate data or employs the DMRS to demodulate data.

When the base station side sends data to the terminal side in the PDSCH region in which the CRS exists by utilizing the DMRS-related transmission mode and employs the format 1A to perform the DCI configuration, the base station side utilizes the scheduling sub-frame of the DCI Format 1A and/or the CCE location in which the DCI is located and/or the aggregate level to indicate whether the terminal side employs the CRS to demodulate data or employs the DMRS to demodulate data.

When the base station side sends data to the terminal side in the PDSCH region by utilizing the DMRS-related transmission mode, if the base station side does not notify beforehand the terminal side of multiple sequence identifiers and/or bandwidth information configured by specific higher-layer signaling, then the base station side generates a DMRS sequence in accordance with a system cell ID and/or bandwidth information.

When the base station side sends data to the terminal side in a PDSCH region by utilizing the DMRS-related transmission mode and employs the format 1A to perform the DCI configuration, if the base station side does not notify beforehand the terminal side of multiple sequence identifiers and/or bandwidth information configured by specific higher-layer signaling, then the base station side generates a DMRS sequence in accordance with a system cell ID and/or bandwidth information.

The system cell ID is a cell ID notified during synchronization or an initial cell ID notified when accessing a carrier, the bandwidth information is the system bandwidth obtained when detecting a Physical Broadcast Channel (PBCH) or the initial bandwidth notified when accessing a carrier.

When the base station side sends data to the terminal side in the PDSCH region in which the CRS exists by utilizing the DMRS-related transmission mode and employs the format 1 A to perform the DCI configuration, if the base station side does not map and allocate a 1-bit identifier through a centralized/distributed VRB in the DCI Format 1A to indicate whether the terminal side employs the CRS to demodulate data or employs the DMRS to demodulate data, then the base station side employs the CRS as a demodulation reference signal to send data within a sub-frame where the CRS exists in the PDSCH region, and employs the DMRS as a demodulation reference signal to send data within a sub-frame where no CRS exists in the PDSCH region.

Relative to the above base station side, the terminal side may learn whether to employ CRS or DMRS for demodulation at the PDSCH scheduled by the DCI Format 1a through at least one of the following indication methods:

> 1. learning through a bit in downlink control indication signaling;

> 2. learning through a scheduled time domain and/or frequency domain resource location.

When the terminal side receives data in the PDSCH region by utilizing the DMRS-related transmission mode and employs the format 1A to perform the DCI configuration, the terminal side learns whether to employ the CRS to demodulate data or to employ the DMRS to demodulate data through a 1 bit identifier mapped and allocated by the centralized/distributed VRB in the DCI Format 1A.

When the terminal side receives data in the PDSCH region by utilizing the DMRS-related transmission mode and employs the format 1A to perform the DCI configuration, the terminal side utilizes a DCI Format 1A scheduling sub-frame and/or a CCE location in which the DCI is allocated and/or an aggregate level to learn whether to employ the CRS to demodulate data or to employ the DMRS to demodulate data.

When the terminal side receives data in the PDSCH region in which the CRS exists by utilizing the DMRS-related transmission mode and employs the format 1 A to perform the DCI configuration, the terminal side utilizes a 1-bit identifier mapped and allocated by the centralized/distributed VRB in the DCI Format 1A to learn whether to employ the CRS to demodulate data or to employ the DMRS to demodulate data.

When the terminal side receives data in the PDSCH region in which the CRS exists by utilizing the DMRS-related transmission mode and employs the format 1 A to perform the DCI configuration, the terminal side utilizes a DCI Format 1 A scheduling sub-frame and/or a CCE location in which the DCI is allocated and/or an aggregate level to learn whether to employ the CRS to demodulate data or to employ the DMRS to demodulate data.

When the terminal side receives data in a PDSCH region by utilizing the DMRS-related transmission mode, if the terminal side does not obtain beforehand multiple sequence identifiers and/or bandwidth information configured by the specific higher-layer signaling, then the terminal side generates a DMRS sequence in accordance with a system cell ID and/or bandwidth information to perform DMRS demodulation.

When the terminal side receives data in the PDSCH region by utilizing the DMRS-related transmission mode and employs the format 1A to perform the DCI configuration, if the terminal side does not obtain beforehand multiple sequence identifiers and/or bandwidth information configured by the specific higher-layer signaling, then the terminal side generates a DMRS sequence in accordance with a system cell ID and/or bandwidth information.

The system cell ID is a cell ID notified during synchronization or an initial cell ID notified when accessing a carrier, the bandwidth information is the system bandwidth obtained when detecting a PBCH or the initial bandwidth notified when accessing a carrier.

When the terminal side receives data in the PDSCH region in which the CRS exists by utilizing the DMRS-related transmission mode and employs the format 1 A to perform the DCI configuration, if the terminal side does not learn whether to employ the CRS for demodulation or to employ the DMRS for demodulation through a 1-bit identifier allocated by centralized/distributed VBR in the DCI Format 1A, then the terminal side employs the CRS as a demodulation reference signal to receive data within a sub-frame where the CRS exists in the PDSCH region, and employs the DMRS as a demodulation reference signal to receive data within a sub-frame where no CRS exists in the PDSCH region. For easy understanding of the disclosure, the disclosure is further explained in combination with the specific embodiment below. Different newly-added 1 or 2 bits and/or PQI indication bits and/or Nscid bits and/or NDI bits in Disable TBs in DCI bits and/or aggregate levels and/or Control Channel Element (CCE) locations where the DCIs are located and/or scheduling sub-frames described in the above embodiments, correspond to different indication information, which may be predefined through the base station or the terminal or may be configured by the base station for the terminal through higher-layer signaling. The system cell ID and bandwidth are referred to a cell ID and bandwidth obtained from a Primary Synchronization Signal (PSS/SSS) and/or the CRS when synchronously establishing a Radio Resource Control (RRC) connection

Embodiment 1

Supposing that the release of UE1 is R11 or higher, a base station side configures two sequence identifiers (X0, X1) for the UE1 through UE-specific higher-layer signaling; when the base station side sends data to the terminal side within a sub-frame where CRS does not exist in a PDSCH region by utilizing a DMRS-related transmission mode, and employs a format 1A to perform DCI configuration, a centralized/distributed VRB in the DCI Format 1A maps and allocates a 1-bit identifier to indicate specific sequence identifier and/or bandwidth information selected from higher-layer configured two sequence identifiers and/or two pieces of bandwidth information and employed by the base station side to send a DMRS sequence. For example, when the value of the 1-bit is 0, it is indicated that the DMRS sequence is generated using X0; when the value of the 1-bit is 1, it is indicated that the DMRS sequence is generated using X1.
The UE1 obtains the specific sequence identifier and/or bandwidth selected from higher-layer configured two sequence identifiers and/or two pieces of bandwidth information and employed by the base station side to send the DMRS sequence, by blind-detecting the 1-bit identifier allocated by the centralized/distributed VRB in the downlink control signaling (DCI Format 1A). For example, when the value of the 1-bit is 0, it is indicated that the DMRS sequence is generated using X0; when the value of the 1-bit is 1, it is indicated that the DMRS sequence is generated using X1.

Embodiment 2

Supposing that the release of UE1 is R11 or higher, the base station side configures two pieces of bandwidth information (S0, S1) for the UE1 through UE-specific higher-layer signaling; when the base station side sends data to the terminal side within a sub-frame where CRS does not exist in a PDSCH region by utilizing a DMRS-related transmission mode, and employs format 1A to perform DCI configuration, a centralized/distributed VRB in the DCI Format 1A maps and allocates a 1-bit identifier to indicate specific bandwidth information selected from higher-layer configured two pieces of bandwidth information and employed by a DMRS sequence sent by the base station side. For example, when the value of the 1-bit is 0, it is indicated that the DMRS sequence is generated using S0; when the value of the 1-bit Is 1, it is indicated that the DMRS sequence is generated using S1.
The UE1 obtains the specific bandwidth information selected from higher-layer configured two pieces of bandwidth information and employed by the base station side to send the DMRS sequence by blind-detecting the 1-bit identifier allocated by the centralized/distributed VRB in the downlink control signaling (DCI Format 1A). For example, when the value of the 1-bit is 0, it is indicated that the DMRS sequence is generated using S0; when the value of the 1-bit is 1, it is indicated that the DMRS sequence is generated using S1.

Embodiment 3

Supposing that the release of the UE1 is R11 or higher, the base station side configures two pieces of bandwidth information (S0, S1) and two sequence identifiers (X0, X1) for the UE1 through UE-specific higher-layer signaling; when the base station side sends data to the terminal side within a sub-frame where CRS does not exist in a PDSCH region by utilizing a DMRS-related transmission mode, and employs format 1A to perform DCI configuration, a centralized/distributed VRB in the DCI Format 1A maps and allocates a 1-bit identifier to indicate specific sequence identifier and bandwidth information selected from higher-layer configured two pieces of bandwidth information and two sequence identifiers and employed by the base station side to send the DMRS sequence. For example, when the value of the 1-bit is 0, it is indicated that the DMRS sequence is generated using S0 and X0; when the value of the 1-bit Is 1, it is indicated that the DMRS sequence is generated using S1 and X1.
The UE1 obtains the specific sequence identifier and bandwidth information selected from higher-layer configured two pieces of bandwidth information and two sequence identifiers and employed by the base station side to send the DMRS sequence, by blind-detecting the 1-bit identifier allocated by the centralized/distributed VRB in the downlink control signaling (DCI Format 1A). For example, when the value of the 1-bit is 0, it is indicated that the DMRS sequence is generated using S0 and X0; when the value of the 1-bit is 1, it is indicated that the DMRS sequence is generated using S1 and X1.

Embodiment 4

Supposing that the release of the UE1 is R11 or higher, the base station side configures two pieces of bandwidth information (S0, S1) and/or two sequence identifiers (X0, X1) for the UE1 through the UE-specific higher-layer signaling; when the base station side sends data to the terminal side in a PDSCH region by utilizing a newly-added 1 or 2 bits and/or a PQI indication bit and/or an Nscid bit and/or an NDI bit in Disable TB in DCI bits and/or an aggregate level and/or a Control Channel Element (CCE) location where the DCI is located and/or a scheduling sub-frame of the DCI to indicate specific bandwidth information selected from higher-layer configured two pieces of bandwidth information and employed by the base station side to send the DMRS sequence.

The UE1 obtains, by detecting the newly-added 1 or 2 bits and/or the PQI indication bit and/or the Nscid bit and/or an NDI bit in Disable TB in DCI bits and/or the aggregate level and/or the Control Channel Element (CCE) location where the DCI is located and/or the scheduling sub-frame of the DCI, specific bandwidth information selected from higher-layer configured two pieces of bandwidth information and employed by the base station side to send the DMRS sequence. For example, when the detected information corresponds to a first configured bandwidth and sequence information, it is indicated that the DMRS sequence is generated using S0; when the detected information corresponds to a second configured bandwidth and sequence information, it is indicated that the DMRS sequence is generated using S1.

The different newly-added 1 or 2 bits and/or PQI indication bits and/or Nscid bits and/or NDI bits in Disable TBs in DCI bits and/or aggregate levels and/or Control Channel Element (CCE) locations where the DCIs are located and/or scheduling sub-frames correspond to different indication information, which may be predefined through the base station and the terminal or be configured for the terminal by the base station through the higher-layer signaling.

Sub-embodiment 1:

Supposing that the release of the UE1 is R11 or higher, the base station side configures two pieces of bandwidth information (S0, S1) and two sequence identifiers (X0, X1) to the UE1 through UE-specific higher-layer signaling; when the base station side sends data to the terminal side in the PDSCH region by utilizing the DMRS-related transmission mode, the base station side utilizes the CCE location of the DCI and the aggregate level to indicate specific bandwidth information and sequence identifier selected from higher-layer configured two pieces of bandwidth information and two sequence identifiers and employed by the base station side to send the DMRS sequence. For example, the first configured bandwidth and sequence information corresponds to a first CCE location and aggregate level state, the DMRS sequence is generated using S0 and X0; the second configured bandwidth and sequence information corresponds to a second CCE location and aggregate level state, the DMRS sequence is generated using S1 and X1.

The UE1 obtains the specific bandwidth information selected from higher-layer configured two pieces of bandwidth information and employed by the base station side to send the DMRS sequence, by detecting the CCE location of the downlink control signaling (DCI) and the aggregate level. For example, when the detected information corresponds to the first configured bandwidth and sequence information (a first CCE location and aggregate level), it is indicated that the DMRS sequence is generated using S0 and X0; when the detected information corresponds to the second configured bandwidth and sequence information (a second CCE location and aggregate level), it is indicated that the DMRS sequence is generated using S1 and X1.

Sub-embodiment 2:

Supposing that the release of the UE1 is R11 or higher, the base station side configures two pieces of bandwidth information (S0, S1) and two sequence identifiers (X0, X1) for the UE1 through UE-specific higher-layer signaling; when the base station side sends data to the terminal side in the PDSCH region by utilizing the DMRS-related transmission mode, the base station side utilizes the Nscid bit of the DCI to indicate the specific bandwidth information and sequence identifier information selected from higher-layer configured two pieces of bandwidth information and two sequence identifiers and employed by the base station side to send the DMRS sequence. For example, the first configured bandwidth and sequence information corresponds to a Nscid state (Nscid=0), the DMRS sequence is generated using S0 and X0; the second configured bandwidth and sequence information corresponds to a Nscid state (Nscid=1), the DMRS sequence is generated using S1 and X1.

The UE1 obtains the specific bandwidth information selected from higher-layer configured two pieces of bandwidth information and employed by the base station side to send the DMRS sequence, by detecting the Nscid bit of the downlink control signaling and the aggregate level. For example, when the detected information corresponds to the first configured bandwidth and sequence information (Nscid=0), it is indicated that the DMRS sequence is generated using S0 and X0; when the detected information corresponds to the second configured bandwidth and sequence information (Nscid=1), it is indicated that the DMRS sequence is generated using S1 and X1.

Sub-embodiment 3:

Supposing that the release of the UE1 is R11 or higher, the base station side configures two pieces of bandwidth information (S0, S1) and two sequence identifiers (X0, X1) for the UE1 through UE-specific higher-layer signaling; when the base station side sends data to the terminal side in the PDSCH region by utilizing the DMRS-related transmission mode, the base station side utilizes the PQI indication bit of the DCI to indicate the specific bandwidth information and sequence identifier selected from higher-layer configured two pieces of bandwidth information and two sequence identifiers and employed by the base station side to send the DMRS sequence. For example, the first configured bandwidth and sequence information corresponds to a PQI=00 and 10 state, it is indicated that the DMRS sequence is generated using S0 and X0; the second configured bandwidth and sequence information corresponds to a PQI=01 and 11 state, it is indicated that the DMRS sequence is generated using S1 and X1.

The UE1 obtains the specific bandwidth information selected from higher-layer configured two pieces of bandwidth information and employed by the base station side to send the DMRS sequence, by detecting the PQI indication bit of the downlink control signaling. For example, when the detected information corresponds to the first configured bandwidth and sequence information (PQI=00 and 10), it is indicated that the DMRS sequence is generated using S0 and X0; when the detected information corresponds to the second configured bandwidth and sequence information (PQI=01 and 11), it is indicated that the DMRS sequence is generated using S1 and X1.

Sub-embodiment 4:

Supposing that the release of the UE1 is R11 or higher, the base station side configures two pieces of bandwidth information (S0, S1) and two sequence identifiers (X0, X1) for the UE1 through UE-specific higher-layer signaling; when the base station side sends data to the terminal side in the PDSCH region by utilizing the DMRS-related transmission mode, the base station side utilizes PQI indication bit of the DCI to indicate the specific bandwidth information and sequence identifier information selected from higher-layer configured two pieces of bandwidth information and two sequence identifiers and employed by the base station side to send the DMRS sequence. For example, the first configured bandwidth and sequence information corresponds to a PQI=00 state, the DMRS sequence is generated using S0 and X0; the second configured bandwidth and sequence information corresponds to a PQI=01 state, the DMRS sequence is generated using S1 and X0; a third configured bandwidth and sequence information corresponds to a PQI=10 state, the DMRS sequence is generated using S0 and X1; a fourth configured bandwidth and sequence information corresponds to a PQI=11 state, the DMRS sequence is generated using S1 and X1.

The UE1 obtains the specific bandwidth information selected from higher-layer configured two pieces of bandwidth information and employed by the base station side to send the DMRS sequence, by detecting the PQI indication bit of the downlink control signaling. For example, when the detected information corresponds to the first configured bandwidth and sequence information (PQI=00), it is indicated that the DMRS sequence is generated using S0 and X0; when the detected information corresponds to the second configured bandwidth and sequence information (PQI=01), it is indicated that the DMRS sequence is generated using S1 and X0; when the detected information corresponds to the third configured bandwidth and sequence information (PQI=10), it is indicated that the DMRS sequence is generated using S0 and X1; when the detected information corresponds to the fourth configured bandwidth and sequence information (PQI=11), it is indicated that the DMRS sequence is generated using S1 and X1.

Sub-embodiment 5:

Supposing that the release of the UE1 is R11 or higher, the base station side configures two pieces of bandwidth information (S0, S1) and two sequence identifiers (X0, X1) for the UE1 through the UE-specific higher-layer signaling; when the base station side sends data to the terminal side in the PDSCH region by utilizing the DMRS-related transmission mode, the base station side utilizes the NDI bit in the Disable TB in the DCI bit to indicate the specific bandwidth information and sequence identifier selected from higher-layer configured two pieces of bandwidth information and two sequence identifiers and employed by the base station side to send the DMRS sequence. For example, the first configured bandwidth and sequence information corresponds to a NDI=0 state in the Disable TB, it is indicated that the DMRS sequence is generated using S0 and X0; the second configured bandwidth and sequence information corresponds to a NDI=1 state in the Disable TB, it is indicated that the DMRS sequence is generated using S1 and X1.

The UE1 obtains the specific bandwidth information selected from higher-layer configured two pieces of bandwidth information and employed by the base station side to send the DMRS sequence, by detecting the NDI bit in the Disable TB in the downlink control signaling DCI bit. For example, when the detected information corresponds to the first configured bandwidth and sequence information (NDI=0 in the Disable TB in the DCI bit), it is indicated that the DMRS sequence is generated using S0 and X0; when the detected information corresponds to the second configured bandwidth and sequence information (NDI=1 in the Disable TB in the DCI bit), it is indicated that the DMRS sequence is generated using S1 and X1.

Sub-embodiment 6:

Supposing that the release of the UE1 is R11 or higher, the base station side configures two pieces of bandwidth information (S0, S1) and two sequence identifiers (X0, X1) for the UE1 through the UE-specific higher-layer signaling; when the base station side sends data to the terminal side in the PDSCH region by utilizing the DMRS-related transmission mode, the base station side utilizes the CCE location of the DCI to indicate the specific bandwidth information and specific sequence identifier selected from higher-layer configured two pieces of bandwidth information and two sequence identifiers and employed by the base station side to send the DMRS sequence. For example, the first configured bandwidth and sequence information corresponds to the first CCE location, it is indicated that the DMRS sequence is generated using S0 and X0; the second configured bandwidth and sequence information corresponds to a second CCE location state, the DMRS sequence is generated using S1 and X1.

The UE1 obtains the specific bandwidth information selected from higher-layer configured two pieces of bandwidth information and employed by the base station side to send the DMRS sequence, by detecting the CCE location of the downlink control signaling (DCI). For example, when the detected information corresponds to the first configured bandwidth and sequence information (the first CCE location), it is indicated that the DMRS sequence is generated using S0 and X0; when the detected information corresponds to the second configured bandwidth and sequence information (the second CCE location), it is indicated that the DMRS sequence is generated using S1 and X1.

Embodiment 5

Supposing that the release of the UE1 is R11 or higher, the base station side configures two pieces of bandwidth information (S0, S1) for the UE1 through UE-specific higher-layer signaling; when the base station side sends data to the terminal side in a PDSCH region by utilizing the DMRS-related transmission mode and the base station side sends the DCI or the DCI format 1 a in a common search space or sends the DCI Format corresponding to enhanced common control information in the common search space, the base station side employs a cell ID and/or bandwidth information to generate and send a DMRS sequence.

When the terminal side receives data in the PDSCH region by utilizing a DMRS-related transmission mode and the terminal side receives the DCI or the DCI format 1a in a common search space or sends DCI Format corresponding to the enhanced common control information in the common search space, the terminal side employs a cell ID and/or bandwidth information to generate a DMRS sequence to demodulate the DMRS.

The cell ID is a cell ID notified during synchronization or an initial cell ID notified when accessing a carrier, the bandwidth information is the system bandwidth obtained when detecting a PBCH or the initial bandwidth notified when accessing a carrier.

Embodiment 6

Supposing that the release of the UE1 is R11 or higher, when the base station side sends data to the terminal side in the PDSCH region by utilizing the DMRS-related transmission mode and employs the format 1A to perform the DCI configuration, the centralized/distributed VRB in the DCI Format 1A maps and allocates a 1-bit identifier to indicate whether the terminal side employs the CRS to demodulate date or employs the DMRS to demodulate data.

When the terminal side receives data in the PDSCH region by utilizing the DMRS-related transmission mode and employs the format 1A to perform the DCI configuration, the terminal side maps and allocates a 1-bit identifier through the centralized/distributed VRB in the DCI Format 1A to learn whether to employ the CRS to demodulate date or to employ the DMRS to demodulate data.

Embodiment 7

When the base station side sends data to the terminal side in the PDSCH region by utilizing the DMRS-related transmission mode and employs the format 1 A to perform the DCI configuration, the base station side utilizes a DCI Format 1A scheduling sub-frame and/or a CCE location in which the DCI is located and/or an aggregate level to indicate whether the terminal side employs the CRS to demodulate date or employs the DMRS to demodulate data.

When the terminal side receives data in the PDSCH region by utilizing the DMRS-related transmission mode and employs the format 1A to perform the DCI configuration, the terminal side utilizes a DCI Format 1A scheduling sub-frame and/or a CCE location in which the DCI is located and/or an aggregate level to learn whether to employ the CRS to demodulate date or to employ the DMRS to demodulate data.

The different scheduling sub-frames and/or CCE locations and/or aggregate levels correspond to different indication information, which may be predefined through the base station and the terminal or be configured for the terminal by the base station through the higher-layer signaling.

Embodiment 8

When the base station side sends data to the terminal side in the PDSCH region in which the CRS exists by utilizing the DMRS-related transmission mode and employs the format 1A to perform the DCI configuration, a centralized/distributed VRB in the DCI Format 1A maps and allocates a 1-bit identifier to indicate whether the terminal side employs the CRS to demodulate date or employs the DMRS to demodulate data.

When the terminal side receives data in the PDSCH region in which the CRS exists by utilizing the DMRS-related transmission mode and employs the format 1 A to perform the DCI configuration, the terminal side utilizes the 1-bit identifier mapped and allocated by the centralized/distributed VRB in the DCI Format 1A to learn whether to employ the CRS to demodulate date or to employ the DMRS to demodulate data.

Embodiment 9

When the base station side sends data to the terminal side in the PDSCH region in which the CRS exists by utilizing the DMRS-related transmission mode and employs the format 1A to perform the DCI configuration, the base station side utilizes a DCI Format 1A scheduling sub-frame and/or a CCE location in which the DCI is located and/or an aggregate level to indicate whether the terminal side employs the CRS to demodulate date or employs the DMRS to demodulate data.

When the terminal side receives data in the PDSCH region in which the CRS exists by utilizing the DMRS-related transmission mode and employs the format 1 A to perform the DCI configuration, the terminal side utilizes a DCI Format 1A scheduling sub-frame and/or a CCE location in which the DCI is located and/or an aggregate level to learn whether to employ the CRS to demodulate date or to employ the DMRS to demodulate data.

Embodiment 10

When the base station side sends data to the terminal side in the PDSCH region by utilizing the DMRS-related transmission mode, if the base station side does not notify beforehand the terminal side of multiple sequence identifiers and/or bandwidth information configured by specific higher-layer signaling, then the base station side generates a DMRS sequence in accordance with a system cell ID and/or bandwidth information.

When the terminal side receives data in the PDSCH region by utilizing the DMRS-related transmission mode, if the terminal side does not obtain beforehand multiple sequence identifiers and/or bandwidth information configured by the specific higher-layer signaling, then the terminal side generates a DMRS sequence in accordance with a system cell ID and/or bandwidth information.

Embodiment 11

When the base station side sends data to the terminal side in the PDSCH region in which the CRS exists by utilizing the DMRS-related transmission mode and employs the format 1A to perform the DCI configuration, if the base station side does not indicate through a 1-bit identifier mapped and allocated by the centralized/distributed VRB in the DCI Format 1A whether the terminal side employs the CRS to demodulate date or employs the DMRS to demodulate data, then the base station side employs the CRS as a demodulation reference signal to send data in a sub-frame where the CRS exists in the PDSCH region, and employs the DMRS as a demodulation reference signal to send data in a sub-frame where no CRS exists in the PDSCH region.

When the terminal side receives data in the PDSCH region in which the CRS exists by utilizing the DMRS-related transmission mode and employs the format 1 A to perform the DCI configuration, if the terminal side does not indicate through a 1-bit identifier mapped allocated by the centralized/distributed VRB in the DCI Format 1A whether to employ the CRS to demodulate date or to employ the DMRS to demodulate data, then the terminal side employs the CRS as a demodulation reference signal to receive data in a sub-frame where the CRS exists in the PDSCH region, and employs the DMRS as a demodulation reference signal to receive data in a sub-frame where no CRS exists in the PDSCH region.

Embodiment 12

When the base station side sends data to the terminal side in the PDSCH region by utilizing the DMRS-related transmission mode and sends a DCI or DCI format 1 a in a common search space or sends a DCI Format corresponding to enhanced common control information in the common search space, the base station side employs a system cell ID and/or bandwidth information to generate and send a DMRS sequence.

When the terminal side receives data in the PDSCH region by utilizing the DMRS-related transmission mode and receives the DCI or the DCI format 1 a in the common search space or sends a DCI Format corresponding to enhanced common control information in the common search space, the terminal side employs a system cell ID and/or bandwidth information to generate a DMRS sequence to demodulate the DMRS.

Embodiment 13

When the base station side sends data to the terminal side in the PDSCH region by utilizing the DMRS-related transmission mode and sends a DCI or a DCI format 1 a in a UE-specific search space, the base station side employs the first one of N (N>1) sequence identifiers and/or S (S>1) pieces of bandwidth information configured beforehand by a higher-layer to generate and send a DMRS sequence. If the higher-layer does not configure N (N>1) sequence identifiers and/or S (S>1) pieces of bandwidth information, then the base station side employs a system cell ID and/or bandwidth information to generate and send the DMRS sequence.

When the terminal side receives data in the PDSCH region by utilizing the DMRS-related transmission mode and receives the DCI or the DCI format 1 a in the UE-specific search space, the terminal side employs the first one of N (N>1) sequence identifiers and/or S (S>1) pieces of bandwidth information configured beforehand by the higher-layer to generate a DMRS sequence to demodulate the DMRS. When the terminal side does not receive N (N>1) sequence identifiers and/or S (S>1) pieces of bandwidth information configured beforehand by the higher-layer, then the terminal side employs a system cell ID and/or bandwidth information to generate a DMRS sequence to demodulate the DMRS.

Embodiment 14

When the base station side sends data to the terminal side in the PDSCH region by utilizing the DMRS-related transmission mode, and a corresponding DCI is DCI format 1a, then the base station side employs a system cell ID and/or bandwidth information to generate and send a DMRS sequence.

When the terminal side receives data in the PDSCH region by utilizing the DMRS-related transmission mode, and the DCI format is DCI format 1 a, then the terminal side employs a system cell ID and/or bandwidth information to generate a DMRS sequence to demodulate the DMRS.

In conclusion, it can be seen from the above description that, regardless of the method or the apparatus implemented by the base station side or the terminal side, a DMRS processing technique in the disclosure, on a premise that an existing DCI-Format is not changed, can ensure dynamic switching of a DMRS sequence to achieve orthogonal and quasi-orthogonal (interference randomization) dynamic switching in a CoMP technique, and can support sending and receiving of data having unequal bandwidths, further improving cell classification gain, reducing interference, and effectively saving energy. Additionally, the configuration may be performed again when the base station side and the terminal side have different understandings for DMRS.

All those described above are only preferred embodiments of the disclosure, and are not used to limit the protection scope of the disclosure.

**Claims**

1. A Demodulation Reference Signal (DMRS) processing method, including:

    configuring beforehand for a terminal side, by a base station side, one or more sequence identifiers and/or bandwidth information needed to generate a DMRS sequence, through User Equipment (UE)-specific higher-layer signaling, and then indicating to the terminal side, by the base station side, specific sequence identifier and/or specific bandwidth information employed to send the DMRS sequence by utilizing at least one of following indication methods:

       using a bit in downlink control indication signaling for indication; and
       using a scheduled time domain and/or frequency domain resource location for indication.

2. The method according to claim 1, wherein the sequence identifier is for generating an initial value of the DMRS sequence, and the sequence identifier is used in the same way as a cell ID in a DMRS sequence generating formula in R10, namely the sequence identifier is utilized to substitute the cell ID.

3. The method according to claim 1, wherein when the base station side sends data utilizing a DMRS-related transmission mode to the terminal side within a sub-frame where a Cell Specific Reference Signal (CRS) does not exist in a Physical Downlink Shared Channel (PDSCH) area, and performs a Downlink Control Information (DCI) configuration using format 1A, a centralized/distributed Virtual Resource Block (VRB) maps and allocates a 1-bit identifier to indicate which sequence identifier and/or which piece of bandwidth information in two sequence identifiers and/or two pieces of bandwidth information configured beforehand by a higher-layer is employed by the base station side to send the DMRS sequence.

4. The method according to claim 3, wherein the DMRS-related transmission mode includes transmission mode 9 and/or transmission mode 10 and/or a transmission mode which utilizes a DMRS as a base demodulation reference signal and is in a more advanced release; the sub-frame where a CRS does not exist in a PDSCH region includes a Multicast Broadcast Single Frequency Network (MBSFN) sub-frame and/or an extended carrier type sub-frame and a sub-frame which does not have CRS transmission later.

5. The method according to claim 1, wherein when the base station side sends data to the terminal side within a sub-frame where a CRS does not exist in a PDSCH region by utilizing a DMRS-related transmission mode, and performs DCI configuration using format x, the base station side utilizes a time domain and/or frequency domain resource location of the DCI Format x to indicate which sequence identifier and/or which piece of bandwidth information in N (N>1) sequence identifiers and/or S (S>1) pieces of bandwidth information configured by a higher-layer is employed by the base station side to send the DMRS sequence;

wherein the DCI format x at least includes one of the following DCI formats: DCI Format 1A, DCI Format 2B, DCI Format 2C, DCI Format 2D, and a DCI Format newly-added in a later release.

6. The method according to claim 1, wherein when the base station side sends data to the terminal side within a sub-frame where a CRS does not exist in a PDSCH region by utilizing a DMRS-related transmission mode, and performs DCI configuration using format x, the base station side utilizes a newly-added 1 or 2 bits and/or a Quasi-Co-Location Indicator (PQI) indication bit and/or an Nscid bit and/or an aggregate level and/or a Control Channel Element (CCE) location where DCI of DCI Format X is located and/or a scheduling sub-frame of the DCI Format X to indicate which sequence identifier and/or which piece of bandwidth information in N (N>1) sequence identifiers and/or S (S>1) pieces of bandwidth information configured beforehand by a higher-layer is employed by the base station side to send the DMRS sequence;
   wherein the DCI Format x at least includes one of the following DCI Formats: DCI Format 1A, DCI Format 2B, DCI Format 2C, DCI Format 2D, and a DCI Format newly-added in a later release.

7. The method according to claim 1, wherein
   when the base station side sends data utilizing a DMRS-related transmission mode to the terminal side in a PDSCH region, the base station side utilizes a newly-added 1 or 2 bits and/or a PQI indication bit and/or an Nscid bit and/or a New Data Indicator (NDI) bit in a Disable Transmitting Block (Disable TB) in DCI bits and/or an aggregate level and/or a Control Channel Element (CCE) location where DCI is located and/or a scheduling sub-frame of the DCI to indicate which piece of bandwidth information in S(S>1) pieces of bandwidth information configured by a higher-layer is employed by the base station side to send the DMRS sequence.

8. The method according to claim 1, wherein when the base station side sends data utilizing a DMRS-related transmission mode to the terminal side in a PDSCH region, and sends DCI 1C or DCI format 1 a in a common search space or sends a DCI Format corresponding to enhanced common control information in the common search space, the base station side employs a system cell ID and/or bandwidth information to generate and send the DMRS sequence.

9. The method according to claim 1, wherein when the base station side sends data utilizing a DMRS-related transmission mode to the terminal side in a PDSCH region, and sends DCI 1C or DCI format 1 a in a UE-specific search space or sends a DCI Format corresponding to enhanced common control information in a common search space, the base station side employs first one of N (N>1) sequence identifiers and/or S(S>1) pieces of bandwidth information configured beforehand by a higher-layer to generate and send the DMRS sequence.

10. The method according to claim 1, wherein when the base station side sends data utilizing a DMRS-related transmission mode to the terminal side in a PDSCH region, and a corresponding DCI is DCI format 1a, the base station side employs a system cell ID and/or bandwidth information to generate and send the DMRS sequence.

11. The method according to claim 1, wherein if a higher-layer does not configure N (N>1) sequence identifiers and/or S(S>1) pieces of bandwidth information, then the base station side employs a system cell ID and/or bandwidth information to generate and send the DMRS sequence.

12. The method according to any one of claims 1-11, further including:

    receiving beforehand, by the terminal side, the UE-specific higher-layer signaling, to obtain the one or more sequence identifiers and/or bandwidth information needed to generate the DMRS sequence, and then obtaining, by the terminal side, which sequence identifier and/or which piece of bandwidth information in the one or more sequence identifiers and/or bandwidth information is employed by the base station side to send the DMRS sequence. by utilizing at least one of following indication methods:

    using a bit in downlink control indication signaling for indication; and
    using a scheduled time domain and/or frequency domain resource location for indication.

13. A Demodulation Reference Signal (DMRS) processing method, including:

    receiving beforehand, by a terminal side, User Equipment (UE)-specific higher-layer signaling, to obtain one or more sequence identifiers and/or bandwidth information needed to generate a DMRS sequence, and then obtaining, by the terminal side, which sequence identifier and/or which piece of bandwidth information in the one or more sequence identifiers and/or bandwidth information is employed by a base station side to send the DMRS sequence by utilizing at least one of following indication methods:

using a bit in downlink control indication signaling for indication; and
using a scheduled time domain and/or frequency domain resource location for indication.

14. The method according to claim 13, wherein the sequence identifier is for generating an initial value of the DMRS sequence, and the sequence identifier is used in the same way as a cell ID in a DMRS sequence generating formula in R10, namely the sequence identifier is utilized to substitute the cell ID.

15. The method according to claim 13, wherein when the terminal side receives data in a sub-frame where a Cell Dedicated Reference Signal (CRS) does not exist in a Physical Downlink Shared Channel (PDSCH) area by utilizing a DMRS-related transmission mode and receives a Downlink Control Information (DCI) using format 1A, the terminal side obtains, by utilizing a 1-bit identifier of a centralized/distributed Virtual Resource Block (VRB) in the DCI Format 1A, which sequence identifier and/or which piece of bandwidth information in two sequence identifiers and/or two pieces of bandwidth information configured by a higher-layer is employed by the base station side to send the DMRS sequence.

16. The method according to claim 15, wherein the DMRS-related transmission mode includes transmission mode 9 and/or transmission mode 10 and/or a transmission mode which utilizes the DMRS as a base demodulation reference signal and is in a more advanced release; the sub-frame where a CRS does not exist in a PDSCH region includes a Multicast Broadcast Single Frequency Network (MBSFN) sub-frame and/or an extended carrier type sub-frame and a sub-frame which does not include a CRS later.

17. The method according to claim 13, wherein when the terminal side receives data within a sub-frame where a CRS does not exist in a PDSCH region by utilizing a DMRS-related transmission mode and receives DCI using format x, the terminal side utilizes a time domain and/or frequency domain resource location of the DCI Format x to obtain which sequence identifier and/or which piece of bandwidth information in N (N>1) sequence identifiers and/or S (S>1) bandwidth information configured by a higher-layer is employed by the base station side to send the DMRS sequence;
wherein the DCI format x at least includes one of following DCI formats: DCI Format 1A, DCI Format 2B, DCI Format 2C, DCI Format 2D, and a DCI Format newly-added in a later release.

18. The method according to claim 13, wherein when the terminal side receives data within a sub-frame where a CRS does not exist in a PDSCH region by utilizing a DMRS-related transmission mode and receives DCI using format x, the terminal side utilizes a newly-added 1 or 2 bits and/or a Quasi-Co-Location Indicator (PQI) indication bit and/or an Nscid bit and/or an aggregate level and/or a Control Channel Element (CCE) location where DCI of DCI Format X is located and/or a scheduling sub-frame of the DCI Format X to obtain which sequence identifier and/or which piece of bandwidth information in N (N>1) sequence identifiers and/or S (S>1) pieces of bandwidth information configured by a higher-layer is employed by the base station side to send the DMRS sequence;
wherein the DCI Format x at least includes one of following DCI Formats: DCI Format 1A, DCI Format 2B, DCI Format 2C, DCI Format 2D, and a DCI Format newly-added in a later release.

19. The method according to claim 12, wherein when the terminal side receives data in a PDSCH region by utilizing a newly-added 1 or 2 bits and/or a PQI indication bit and/or an Nscid bit and/or an aggregate level and/or a Control Channel Element (CCE) location where DCI is located and/or a scheduling sub-frame of the DCI to obtain which piece of bandwidth information in S(S>1) pieces of bandwidth information configured by a higher-layer is employed by the base station side to send the DMRS sequence.

20. The method according to claim 13, wherein when the terminal side receives data in a PDSCH region by utilizing a DMRS-related transmission mode, and receives DCI 1C or DCI format 1 a in a common search space or sends a DCI Format corresponding to enhanced common control information in the common search space, the terminal side employs a system cell ID and/or bandwidth information to generate the DMRS sequence to demodulate a DMRS.

21. The method according to claim 13, wherein when the terminal side receives data in a PDSCH region by utilizing a DMRS-related transmission mode, and a DCI format is DCI format 1a, the terminal side employs a system cell ID and/or bandwidth information to generate the DMRS sequence to demodulate a DMRS.

22. The method according to claim 13, wherein when the terminal side receives data in a PDSCH region by utilizing a DMRS-related transmission mode, and receives DCI 1C or DCI format 1 a in a UE-specific search space or sends a DCI Format corresponding to enhanced common control information in a common search space, the terminal side employs first one of N(N>1)sequence identifiers and/or S(S>1) pieces of bandwidth information configured beforehand by a higher-layer to generate the DMRS sequence to demodulate a DMRS.

23. The method according to claim 13, wherein when the terminal side does not receive N (N>1) sequence identifiers and/or S(S>1) pieces of bandwidth information configured by a higher-layer, the terminal side employs a system cell ID and/or bandwidth information to generate the DMRS sequence to demodulate a DMRS.

24. The method according to any one of claims 13-23, before the terminal side receives the one or more sequence identifiers and/or the bandwidth information, the method further including:

configuring, by the base station side, the one or more sequence identifiers and/or bandwidth information needed to generate the DMRS sequence, for the terminal side beforehand through the UE specific higher-layer signaling, and then indicating to the terminal side, by the base station side, specific sequence identifier and/or bandwidth information employed to send the DMRS sequence by utilizing at least one of following indication methods:

using a bit in downlink control indication signaling for indication; and
using a scheduled time domain and/or frequency domain resource location for indication.

25. A Demodulation Reference Signal (DMRS) processing method, including:

notifying, by a base station side, a terminal side of whether a Cell Specific Reference Signal (CRS) is employed for demodulation or a DMRS is employed for demodulation at a Physical Downlink Shared Channel (PDSCH) scheduled by Downlink Control Information (DCI) Format 1 a, through at least one of following methods:

notifying through a bit in downlink control indication signaling; and
notifying through a scheduled time domain and/or frequency domain resource location.

26. The method according to claim 25, wherein when the base station side sends data by utilizing a DMRS-related transmission mode to the terminal side in a PDSCH region and employs format 1A to perform DCI configuration, a centralized/distributed Virtual Resource Block (VRB) in the DCI Format 1A maps and allocates a 1-bit identifier to indicate whether the terminal side employs the CRS to demodulate the data or employs the DMRS to demodulate the data.

27. The method according to claim 25, wherein when the base station side sends data by utilizing a DMRS-related transmission mode to the terminal side in a PDSCH region and employs format 1 A to perform DCI configuration, the base station side utilizes a DCI Format 1A scheduling sub-frame and/or a Control Channel Element (CCE) location in which DCI is located and/or an aggregate level to indicate whether the terminal side employs the CRS to demodulate the data or employs the DMRS to demodulate the data.

28. The method according to claim 25, wherein when the base station side sends data to the terminal side in a PDSCH region in which the CRS exists by utilizing a DMRS-related transmission mode and employs format 1A to perform DCI configuration, a centralized/distributed VRB in the DCI Format 1A maps and allocates a 1-bit identifier to indicate whether the terminal side employs the CRS to demodulate the data or employs the DMRS to demodulate the data.

29. The method according to claim 25, wherein when the base station side sends data to the terminal side in a PDSCH region in which the CRS exists by utilizing a DMRS-related transmission mode and employs format 1A to perform DCI configuration, the base station side utilizes a DCI Format 1A scheduling sub-frame and/or a CCE location in which DCI is located and/or an aggregate level to indicate whether the terminal side employs the CRS to demodulate the data or employs the DMRS to demodulate the data.

30. The method according to claim 25, wherein when the base station side sends data to the terminal side in a PDSCH region by utilizing a DMRS-related transmission mode, if the base station side does not beforehand notify the terminal side of multiple sequence identifiers and/or bandwidth information configured by User Equipment (UE)-specific higher-layer signaling, then the base station side generates a DMRS sequence in accordance with a system cell ID and/or bandwidth information.

31. The method according to claim 25, wherein when the base station side sends data to the terminal side in a PDSCH region by utilizing a DMRS-related transmission mode and employs format 1A to perform DCI configuration, if the base station side does not notify beforehand the terminal side of the multiple sequence identifiers and/or bandwidth information configured by UE-specific higher-layer signaling, then the base station side generate a DMRS sequence in accordance with a system cell ID and/or bandwidth information.

32. The method according to claim 25, wherein when the base station side sends data by utilizing a DMRS-related transmission mode to the terminal side in a PDSCH region in which the CRS exists, and employs format 1A to perform DCI configuration, if the base station side does not maps and allocates a 1-bit identifier through a centralized/distributed VRB in the DCI Format 1A to indicate whether the terminal side employs the CRS to demodulate the data or employs the DMRS to demodulate the data, then the base station side employs the CRS as a demodulation reference signal to send the data in a sub-frame where the CRS exists in the PDSCH region, and employs the DMRS as a demodulation reference signal to send the data in a sub-frame where no CRS exists in the PDSCH region.

33. The method according to claim 30 or 31, wherein the system cell ID is a cell ID notified during synchronization or an initial cell ID notified when accessing a carrier, the bandwidth information is a system bandwidth obtained when detecting a Physical Broadcast Channel (PBCH) or an initial bandwidth notified when accessing a carrier.

34. The method according to any one of claims 25-32, further includes:

   learning, by the terminal side, whether the Cell Specific Reference Signal (CRS) is employed for demodulation or the DMRS is employed for demodulation at the PDSCH scheduled by the DCI Format 1 a through at least one of following indication methods:

   learning through a bit in downlink control indication signaling; and
   learning through a scheduled time domain and/or frequency domain resource location.

35. A Demodulation Reference Signal (DMRS) processing method, including:

   learning, by a terminal side, whether a Cell Specific Reference Signal (CRS) is employed for demodulation or a DMRS is employed for demodulation at a Physical Downlink Shared Channel (PDSCH) scheduled by a Downlink Control Information(DCI) Format 1 a through at least one of following indication methods:

   learning through a bit in downlink control indication signaling; and
   learning through a scheduled time domain and/or frequency domain resource location.

36. The method according to claim 35, wherein when the terminal side receives data in a PDSCH region by utilizing a DMRS-related transmission mode and employs format 1A to perform DCI configuration, the terminal side obtains, through a 1-bit identifier mapped and allocated by a centralized/distributed Virtual Resource Block (VRB), whether to employ the CRS to demodulate the data or to employ the DMRS to demodulate the data.

37. The method according to claim 35, wherein when the terminal side receives data in a PDSCH region by utilizing a DMRS-related transmission mode and employs format 1A to perform DCI configuration, the terminal side utilizes a DCI Format 1A scheduling sub-frame and/or a Control Channel Element (CCE) location in which DCI is allocated and/or an aggregate level to learn whether to employ the CRS to demodulate the data or to employ the DMRS to demodulate the data.

38. The method according to claim 35, wherein when the terminal side receives data in a PDSCH region in which the CRS exists by utilizing a DMRS-related transmission mode and employs format 1A to perform DCI configuration, the terminal side utilizes a 1-bit identifier mapped and allocated by a centralized/distributed VRB in the DCI Format 1A to learn whether to employ the CRS to demodulate the data or to employ the DMRS to demodulate the data.

39. The method according to claim 35, wherein when the terminal side receives data in a PDSCH region in which the CRS exists by utilizing a DMRS-related transmission mode and employs format 1A to perform DCI configuration, the terminal side utilizes a DCI Format 1A scheduling sub-frame and/or a CCE location in which DCI is allocated and/or an aggregate level to learn whether to employ CRS to demodulate the data or to employ the DMRS to demodulate the data.

40. The method according to claim 35, wherein when the terminal side receives data in the PDSCH region by utilizing a DMRS-related transmission mode, if the terminal side does not obtain beforehand multiple sequence identifiers and/or bandwidth information configured by specific higher-layer signaling, then the terminal side generates a DMRS sequence in accordance with a system cell ID and/or bandwidth information.

41. The method according to claim 35, wherein when the terminal side receives data in a PDSCH region by utilizing a DMRS-related transmission mode and employs format 1A to perform DCI configuration, if the terminal side does not obtain beforehand multiple sequence identifiers and/or bandwidth information configured by specific higher-layer signaling, then the terminal side generates a DMRS sequence in accordance with a system cell ID and/or bandwidth information.

**42.** The method according to claim 41, wherein the system cell ID is a cell ID notified during synchronization or an initial cell ID notified when accessing a carrier, the bandwidth information is a system bandwidth obtained when detecting a Physical Broadcast Channel (PBCH) or an initial bandwidth notified when accessing a carrier.

**43.** The method according to claim 35, wherein when the terminal side receives data in a PDSCH region in which the CRS exists by utilizing a DMRS-related transmission mode and employs format 1A to perform DCI configuration, if the terminal side does not learn whether to employ the CRS for demodulation or to employ the DMRS for demodulation through a 1-bit identifier allocated by a centralized/distributed VBR in the DCI Format 1A, then the terminal side employs the CRS as a demodulation reference signal to receive the data in a sub-frame where the CRS exists in the PDSCH region, and employs the DMRS as a demodulation reference signal to receive the data in a sub-frame where no CRS exists in the PDSCH region.

**44.** The method according to any one of claims 35-42, before the terminal side learns whether to employ the CRS for demodulation or to employ the DMRS for demodulation, the method further including:

notifying, by the base station side, the terminal side of whether the CRS is employed for demodulation or the DMRS is employed for demodulation at the PDSCH scheduled by the DCI Format 1 a through at least one of following methods:

notifying through a bit in downlink control indication signaling; and
notifying through a scheduled time domain and/or frequency domain resource location.

**45.** A Demodulation Reference Signal (DMRS) processing apparatus, located at a base station side, and configured to configure beforehand through User Equipment (UE)-specific higher-layer signalling, for a terminal side, one or more sequence identifiers and/or bandwidth information needed to generate a DMRS sequence, and then indicate to the terminal side specific sequence identifier and/or bandwidth information employed to send the DMRS sequence by utilizing at least one of following indication methods:

using a bit in downlink control indication signaling for indication; and
using a scheduled time domain and/or frequency domain resource location for indication.

**46.** The apparatus according to claim 45, wherein the terminal side is configured to:

receive beforehand the UE-specific higher-layer signaling to obtain the one or more sequence identifiers and/or bandwidth information needed to generate the DMRS sequence, and then obtain the specific sequence identifier and/or bandwidth information employed by the base station side to send the DMRS sequence in the one or more sequences and/or bandwidth information by utilizing at least one of following indication methods:

using a bit in downlink control indication signaling for indication; and
using a scheduled time domain and/or frequency domain resource location for indication.

**47.** The apparatus according to claim 45 or 46, wherein the apparatus is a base station or is provided in a base station.

**48.** A Demodulation Reference Signal (DMRS) processing apparatus, located at a terminal side, configured to receive beforehand User Equipment (UE)-specific higher-layer signaling to obtain one or more sequence identifiers and/or bandwidth information needed to generate a DMRS sequence, and then obtain specific sequence identifier and/or bandwidth information employed by a base station side to send the DMRS sequence in the one or more sequences identifier and/or bandwidth information by utilizing at least one of following indication methods:

using a bit in downlink control indication signaling for indication; and
using a scheduled time domain and/or frequency domain resource location for indication.

**49.** The apparatus according to claim 48, wherein the apparatus communicates with the base station side, and the base station side is configured to configure beforehand for the terminal side, the one or more sequence identifiers and/or bandwidth information needed to generate the DMRS sequence, through the UE-specific higher-layer signaling, and then indicate to the terminal side the specific sequence identifier and/or bandwidth information employed to send the DMRS sequence, by utilizing at least one of following indication methods:

using a bit in downlink control indication signaling for indication; and
using a scheduled time domain and/or frequency domain resource location for indication.

50. The method according to claim 48 or 49, wherein the apparatus is a terminal or provided in a terminal.

51. A Demodulation Reference Signal (DMRS) processing apparatus, located at a base station side, configured to notify a terminal side of whether a Cell Specific Reference Signal (CRS) is employed for demodulation or a DMRS is employed for demodulation at a Physical Downlink Shared Channel (PDSCH) scheduled by a Downlink Control Information(DCI) Format 1 a, through at least one of following methods:

> notifying through a bit in downlink control indication signaling; and
> notifying through a scheduled time domain and/or frequency domain resource location.

52. The apparatus according to claim 51, wherein the terminal side is configured to:

> learn whether the CRS is employed for demodulation or the DMRS is employed for demodulation at the PDSCH scheduled by the DCI Format 1 a, through at least one of following indication methods:
>
> > learning through a bit in downlink control indication signaling; and
> > learning through a scheduled time domain and/or frequency domain resource location.

53. The apparatus according to claim 51 or 52, wherein the apparatus is a base station or provided in a base station.

54. A Demodulation Reference Signal (DMRS) processing apparatus, located at a terminal side, configured to learn whether a Cell Specific Reference Signal (CRS) is employed for demodulation or a DMRS is employed for demodulation at a Physical Downlink Shared Channel (PDSCH) scheduled by a Downlink Control Information (DCI) Format 1 a by at least one of following indication methods:

> learning through a bit in downlink control indication signaling; and
> learning through a scheduled time domain and/or a frequency domain resource location.

55. The apparatus according to claim 54, wherein the apparatus communicates with a base station side, and the base station side is configured to notify the terminal side of whether the PDSCH scheduled by the DCI Format 1 a employs the CRS for demodulation or employs the DMRS for demodulation by at least one of the following methods:

> notifying through a bit in downlink control indication signaling; and
> notifying through a scheduled time domain and/or the frequency domain resource location.

56. The apparatus according to claim 54 or 55, wherein the apparatus is a terminal or provided in a terminal.

Fig. 1

/ 110

A base station side configures beforehand for a terminal side one or more
sequence identifiers and/or bandwidth information needed to generate a
DMRS sequence, through UE-specific higher-layer signaling

/ 120

The base station side indicates to the terminal side the specific sequence
identifier and/or bandwidth information employed to send the DMRS sequence
by utilizing at least one of the following indication methods:
1.  using a bit in downlink control indication signaling for indication;  and
2.  using a scheduled time domain and/or frequency domain resource location
for indication

Fig. 2

/ 210

A terminal side receives beforehand UE-specific higher-layer signaling to obtain
one or more sequence identifiers and/or bandwidth information needed to generate
a DMRS sequence

/ 220

The terminal side obtains the specific sequence identifier and/or bandwidth
information in one or more sequence identifiers and/or bandwidth information
employed by the base station side to send the DMRS sequence, by utilizing at least
one of the following indication methods:
1.  using a Bit in downlink control indication signaling for indication;  and
2.  using a scheduled time domain and/or frequency domain resource location for
indication

# INTERNATIONAL SEARCH REPORT

| | International application No. |
|---|---|
| | PCT/CN2013/074382 |

**A. CLASSIFICATION OF SUBJECT MATTER**

See the extra sheet

According to International Patent Classification (IPC) or to both national classification and IPC

**B. FIELDS SEARCHED**

Minimum documentation searched (classification system followed by classification symbols)

IPC: H04W; H04L

Documentation searched other than minimum documentation to the extent that such documents are included in the fields searched

Electronic data base consulted during the international search (name of data base and, where practicable, search terms used)

CNPAT, WPI, EPODOC, CNKI: ZTE; GUO, Senbao; SUN, Yunfeng; ZHANG, Wenfeng; cell reference signal, demodulatjion, generat+, create, DMRS, demodulat+ w reference w signal, bit, indicate, location, position, sequence, identif+, bandwidth, CRS, cell specific reference signal, modulat+

**C. DOCUMENTS CONSIDERED TO BE RELEVANT**

| Category* | Citation of document, with indication, where appropriate, of the relevant passages | Relevant to claim No. |
|---|---|---|
| X | CN 102340382 A (ACADEMY OF TELECOMMUNICATION TECHNOLOGY), 01 February 2012 (01.02.2012), description, paragraphs [0043]-[0116], and figure 5 | 1-24, 45-50 |
| X | CN 102395204 A (NEW POSTCOM EQUIPMENT CO., LTD.), 28 March 2012 (28.03.2012), description, paragraphs [0111]-[0134], and figure 5 | 25-44, 51-56 |
| A | CN 102142918 A (ACADEMY OF TELECOMMUNICATION TECHNOLOGY), 03 August 2011 (03.08.2011), the whole document | 1-56 |
| A | CN 102611486 A (ZTE CORP.), 25 July 2012 (25.07.2012), the whole document | 1-56 |
| A | US 2012/0020323 A1 (LG ELECTRONICS INC.), 26 January 2012 (26.01.2012), the whole document | 1-56 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 04 June 2013 (04.06.2013) | 11 July 2013 (11.07.2013) |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer CAO, Xiaoning Telephone No.: (86-10) 62413462 |
|---|---|

Form PCT/ISA/210 (second sheet) (July 2009)

## INTERNATIONAL SEARCH REPORT
### Information on patent family members

| International application No. |
|---|
| **PCT/CN2013/074382** |

| Patent Documents referred in the Report | Publication Date | Patent Family | Publication Date |
|---|---|---|---|
| CN 102340382 A | 01.02.2012 | None | |
| CN 102395204 A | 28.03.2012 | None | |
| CN 102142918 A | 03.08.2011 | WO 2012130148 A1 | 04.10.2012 |
| CN 102611486 A | 25.07.2012 | WO 2012097647 A1 | 26.07.2012 |
| US 2012/0020323 A1 | 26.01.2012 | WO 2010117240 A2 | 14.10.2010 |

Form PCT/ISA/210 (patent family annex) (July 2009)

## INTERNATIONAL SEARCH REPORT

| International application No. |
|---|
| **PCT/CN2013/074382** |

**CLASSIFICATION OF SUBJECT MATTER**

H04W 72/04 (2009.01) i

H04L 1/02 (2006.01) i

Form PCT/ISA/210 (extra sheet) (July 2009)